# EUROPÄISCHE PATENTSCHRIFT

(11) **EP 1 630 004 B1**
(45) Veröffentlichungstag und Bekanntmachung des Hinweises auf die Patenterteilung: **02.11.2011**
(21) Anmeldenummer: 04019999.4
(22) Anmeldetag: 24.08.2004
(51) Int. Cl.: B60C 11/03, B60C 11/12, B60C 11/00

(54) **Fahrzeugluftreifen**
Pneumatic vehicle tyre
Pneumatique pour véhicules

(43) Veröffentlichungstag der Anmeldung: 01.03.2006
(73) Patentinhaber: Continental Reifen Deutschland GmbH, 30165 Hannover (DE)
(72) Erfinder: Heine, Stefan, 30163 Hannover (DE); Röger, Bernhard, 30823 Garbsen (DE); Kachel, Uwe, 38527 Meine (DE)
(74) Vertreter: Finger, Karsten

(56) Entgegenhaltungen:
- EP-A- 0 686 517
- EP-A- 0 864 446
- EP-A- 1 308 319
- EP-A1- 1 619 048
- PATENT ABSTRACTS OF JAPAN Bd. 2000, Nr. 02, 29. Februar 2000 (2000-02-29) -& JP 11 321237 A (TOYO TIRE & RUBBER CO LTD), 24. November 1999 (1999-11-24)
- PATENT ABSTRACTS OF JAPAN Bd. 2003, Nr. 12, 5. Dezember 2003 (2003-12-05) -& JP 2003 326917 A (TOYO TIRE & RUBBER CO LTD), 19. November 2003 (2003-11-19)
- PATENT ABSTRACTS OF JAPAN Bd. 0082, Nr. 44 (M-337), 9. November 1984 (1984-11-09) -& JP 59 124413 A (YOKOHAMA GOMU KK), 18. Juli 1984 (1984-07-18)

## Beschreibung

Die Erfindung betrifft einen Fahrzeugluftreifen, insbesondere Radialreifen für Personenkraftwagen, mit einem asymmetrisch ausgeführten Laufstreifen, dessen mit dem Untergrund in Kontakt tretender Bereich in zwei strukturell unterschiedliche, in Umfangsrichtung umlaufende Profilbereiche geteilt ist, von welchen der eine den Außenschulterbereich und der andere den Innenschulterbereich aufweist, wobei der Laufstreifen einen Umfangsbereich aus einer ersten Laufstreifenmischung und einen Umfangsbereich aus einer zweiten Laufstreifenmischung aufweist, wobei die erste Laufstreifenmischung härter ist und einen größeren dynamischen Speichermodul E' bei 55°C aufweist als die zweite Laufstreifenmischung.

Ein derartiger Fahrzeugluftreifen ist aus der JP 11 321237 A bekannt. Der Laufstreifen dieses Reifens ist asymmetrisch ausgeführt und setzt sich daher aus einem die Außenschulter und aus einem die Innenschulter aufweisenden Profilbereich zusammen. Die beiden Profilbereiche sind voneinander durch eine in Umfangsrichtung umlaufende Umfangsnut getrennt. Der die Außenschulter aufweisende Profilbereich weist eine Laufstreifenmischung auf, welche sich von der Laufstreifenmischung, die in dem die Innenschulter ausweisenden Profilbereich vorgesehen ist, unterscheidet. Dabei verläuft die Mischungsgrenze im Bereich der erwähnten Umfangsnut und ist durch ihren Verlauf in radialer Richtung zur Innenschulter zu versetzt.

Ein weiterer Fahrzeugluftreifen ist aus der US 6,719,025 A bekannt. Dieser Reifen weist einen Laufstreifen mit einer asymmetrischen Profilierung auf, wobei, über den Umfang betrachtet, zwei Laufstreifenabschnitte aus unterschiedlichen Mischungen vorgesehen sind, die sich auch in ihrer strukturellen Gestaltung voneinander unterscheiden. Jener Laufstreifenabschnitt, welcher bei am Fahrzeug montierten Reifen der Fahrzeuglängsachse näher liegt und den Innenschulterbereich des Reifens aufweist, ist aus einer Laufstreifenmischung hergestellt, deren dynamischer Speichermodul E' geringer ist als die Härte bzw. der dynamische Speichermodul E' jener Laufstreifenmischung, aus welcher der andere Laufstreifenabschnitt hergestellt ist. Ein derart ausgeführter Reifen soll im Handling und im Fahrkomfort verbessert sein. Die EP 1 308 319 A befasst sich mit einem Fahrzeugluftreifen, welcher besonders ausgewogene Winterfahreigenschaften aufweisen soll. Der die Außenschulter des Laufstreifens umfassende Laufstreifenabschnitt wird aus einer Mischung mit einer höheren Glasübergangstemperatur hergestellt, als der die Innenschulter umfassende Abschnitt des Laufstreifens.

Aus dem US-Patent 4,385,653 ist ein Reifen bekannt, dessen Laufstreifen derart ausgeführt ist, dass der Laufstreifenmittelbereich aus einer Gummimischung mit einem geringen Hystereseverlust und die Seitenbereiche aus einer Gummimischung mit einem höheren Hystereseverlust bestehen. Durch dies Maßnahme soll der Rollwiderstand reduziert werden.

Bei dem aus der EP 1 184 205 A bekannten Reifen wird der Laufstreifen aus zwei unterschiedlichen Mischungskomponenten hergestellt, wobei die die Innenschulter umfassende Komponente hinsichtlich Verschleißfestigkeit und Rollwiderstand optimiert ist und die reifenaußenseitig gelegene Komponente aus einer hinsichtlich des Griffes optimierten Mischung hergestellt wird. Der aus der EP 0 686 515 B bekannte Fahrzeugluftreifen mit einer axial geteilten Lauffläche ist derart ausgeführt, dass ein fahrzeugäußerer Streifen, der eine Breite zwischen 20% und 25% der gesamten Aufstandsflächenbreite aufweist, aus einer Mischung hergestellt ist, die höchstens 70% des Abriebvolumens zeigt wie jene Mischung, aus welcher der übrige Bereich der Lauffläche besteht. Aus der JP 1 132 1237 A ist ein asymmetrisch ausgeführter Laufstreifen bekannt, dessen der Außenschulter benachbarte Laufstreifenabschnitt aus einer härteren Mischung besteht als der der Innenschulter benachbarte Laufstreifenabschnitt.

Der Erfindung liegt die Aufgabe zugrunde, einen Fahrzeugluftreifen der eingangs genannten Art hinsichtlich einer funktionalen Zuordnung der Eigenschaften zur Außenseite, dem mittleren Bereich und zur Innenseite des Reifenlaufstreifens zu verbessern, wobei die klassischen Zielkonflikte - beim Winterreifen Verbesserung des Schneegriffes mit gleichzeitiger Verbesserung des Handlings unter trockenen Fahrbedingungen, beim Sommerreifen Verbesserung des Nassgriffes bei gleichzeitiger Verbesserung des Handlings unter trockenen Fahrbedingungen - wesentlich besser als bei den aus dem Stand der Technik bekannten Reifen gelöst werden sollen.

Gelöst wird die gestellte Aufgabe erfindungsgemäß dadurch, dass die Grenze zwischen den beiden Umfangsbereichen aus den unterschiedlichen Mischungen in jenem Profilbereich verläuft, welcher die Außenschulter des Laufstreifens aufweist, und gegenüber der Grenze zwischen den unterschiedlich strukturierten Profilbereichen in axialer Richtung und Richtung Außenschulter versetzt ist.

Die Erfindung eröffnet somit eine Vielzahl von Möglichkeiten, die funktionale Zuordnung der Reifeneigenschaften zu bestimmten Profilbereichen wesentlich besser durchzuführen, als es beim Stand der Technik der Fall ist, bei welchem die genannten Grenzen zusammenfallen. Sowohl bei PKW-Reifen, die vorrangig für den Sommereinsatz als auch bei solchen, die vorrangig für den Wintereinsatz vorgesehen sind, lässt sich die funktionale Zuordnung optimieren.

Bei einer bevorzugten Ausführungsform der Erfindung ist in jenem Profilbereich, welcher die Außenschulter des Laufstreifens aufweist, der Umfangsbereich aus der ersten härteren Mischung angeordnet. Diese Maßnahme ist von besonderem Vorteil, weil dadurch dem Umstand sehr gut Rechnung getragen werden kann, dass sich die Bodenaufstandsfläche bei hohen Querkräften unter Kurvenfahrt derart ausbildet, dass sie im Bereich der Außenschulter eine zunehmend größere Umfangserstreckung aufweist. Der hier vorgesehene Umfangsbereich kann daher bezüglich seiner Mischung derart ausgelegt werden, dass die Kraftübertragung bei Kurvenfahrt optimiert wird.

Ist ein erfindungsgemäß ausgeführter Reifen ein Winterreifen mit zwei Umfangsbereichen aus unterschiedlichen Mischungen im Laufstreifen, so ist es von Vorteil, wenn der Unterschied in der Shore A Härte der beiden Mischungen bis zu 15 Härtepunkte beträgt. Damit lässt sich eine gute Balance der Winterfahreigenschaften und der auch im Winter erforderlichen guten Eigenschaften auf trockenen Fahrbahnen erzielen.

Bei Sommerreifen steht eine gute Balance das Nassgriffes und der Fahreigenschaften auf trockenem Untergrund im Vordergrund. In diesem Zusammenhang ist es von Vorteil, wenn bei einem Sommerreifen, dessen Laufstreifen aus zwei Umfangsbereichen aus unterschiedlichen Mischungen besteht, der Unterschied in der Shore A Härte bis zu 12 Härtepunkte beträgt.

Sowohl bei Winterreifen als auch bei Sommerreifen mit Laufstreifen aus zwei Umfangsbereichen aus unterschiedlichen Mischungen soll der Unterschied im dynamischen Elastizitätsmodul E' zwischen 3 und 14 MPa betragen. Da der dynamischen Speichermodul E' ein Maß für die Steifigkeit ist, spielt hier für die tatsächliche Auslegung auch eine Rolle, wie das Profil in diesen Umfangsbereichen strukturell ausgelegt wird.

Bei einer besonders bevorzugten Ausführungsform der Erfindung schließt an die Umfangsbereiche aus der ersten und der zweiten Mischung ein Umfangsbereich aus einer dritten Mischung an, welcher die geringste Shore A Härte und den geringsten Elastizitätsmodul E' von allen Mischungen aufweist und den Innenschulterbereich umfasst. Auf diese Weise lässt sich die Übertragung von Querkräften über die Außenschulter bei Kurvenfahrt noch besser durch die Auslegung der Mischungen in diesen Umfangsbereichen berücksichtigen, als bei einer Ausführung mit zwei Umfangsbereichen.

Gemäß der Erfindung kann dabei vorgesehen sein, dass die Grenze zwischen dem zweiten und dem dritten Umfangsbereich mit der Grenze zwischen den beiden Profilbereichen zumindest im Wesentlichen zusammenfällt. Diese Maßnahme erleichtert eine Anpassung der strukturellen Auslegung der Umfangsbereiche an die durch die unterschiedlichen Mischungen bedingten Eigenschaften.

Es hat sich dabei als günstig herausgestellt, wenn die Mischungen für den zweiten und den dritten Umfangsbereich im Polymersystem zumindest im Wesentlichen übereinstimmen und wenn insbesondere die Mischungen für den zweiten und den dritten Umfangsbereich unterschiedliche Anteile an Kieselsäure und an Ruß enthalten. Auch dies sind Maßnahmen, die zur Optimierung der Kraftübertragung bei Kurvenfahrt beitragen.

Der die Außenschulter umfassende Profilbereich nimmt ferner zwischen 30% und 45% der Laufstreifenbreite B ein. Somit wird bei der strukturellen Auslegung des Laufstreifens in jenem Bereich, welcher die Innenschulter umfasst, mehr Abrollfläche zur Verfügung gestellt, was günstig für jene Eigenschaften ist, die vorrangig durch die strukturelle Auslegung des Profils in diesem Bereich bestimmt werden.

Der die Außenschulter umfassende Umfangsbereich sollte zwischen 15% und 25% der Laufstreifenbreite B einnehmen. Von der Mischung her kann daher dieser Bereich optimal auf die Außenschulter abgestimmt werden, ohne dass ein Großteil der strukturellen Auslegung des Laufstreifens mitberücksichtigt werden muss.

Es hat sich ferner auch als vorteilhaft herausgestellt, wenn bei einer Teilung in drei Umfangsbereiche der mittlere Umfangsbereich 15% bis 20% der Laufstreifenbreite B einnimmt.

Für einen gleichmäßigen Abrieb des Laufstreifens ist es ferner von Vorteil, wenn die Grenzen zwischen den Profilbereichen und die Grenzen zwischen den Umfangsbereichen zumindest im Wesentlichen im Bereich von in Umfangsrichtung umlaufenden Nuten verlaufen.

Weitere Merkmale, Vorteile und Einzelheiten der Erfindung werden anhand der einzigen Zeichnungsfigur, die eine Draufsicht auf eine Teilabwicklung einer Ausführungsform eines Laufstreifenprofils eines Fahrzeugluftreifens darstellt, näher beschrieben.

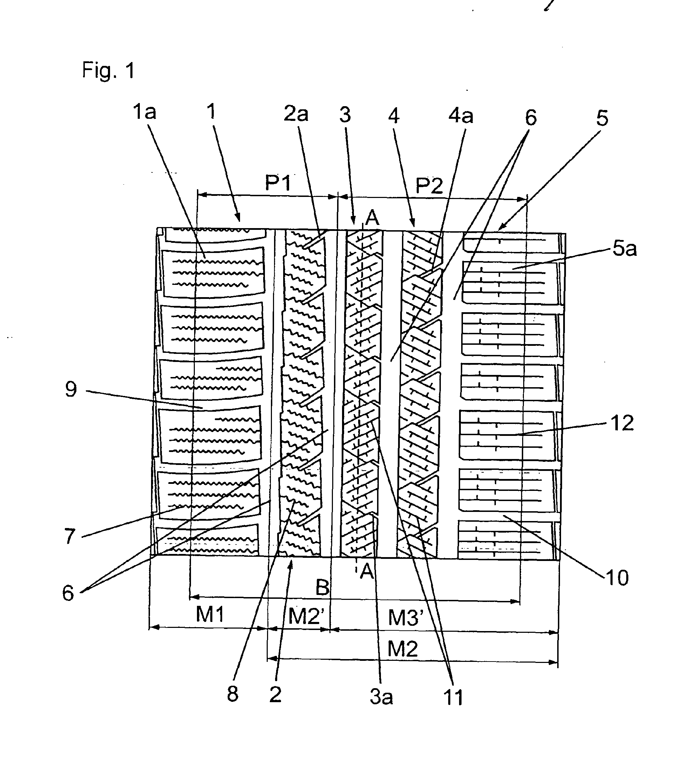

Das in Fig. 1 gezeigte Laufstreifenprofil ist für PKW-Winterreifen vorgesehen. Die Erfindung ist jedoch auf Winterreifen nicht eingeschränkt, gemäß der Erfindung können auch Sommerreifen oder sogenannte Ganzjahresreifen ausgeführt werden. Erfindungsgemäß ausgeführten Reifen ist gemeinsam, dass ihr Laufstreifen axial in zwei funktional unterschiedliche und strukturell verschieden ausgeführte und in Umfangsrichtung umlaufende Profilbereiche P1, P2 geteilt ist. Bei der in Fig. 1 gezeigten Ausführungsform weist der Profilbereich P1 den Außenschulterbereich des Laufstreifens auf, also jenen Bereich, welcher bei am Fahrzeug montierten Reifen an der Fahrzeugaußenseite liegen soll und bei einem Winterreifen konstruktiv so ausgelegt wird, dass das Profil möglichst optimale Eigenschaften auf trockenen Fahrbahnen aufweist. Der Profilbereich P2 weist den Innenschulterbereich des Laufstreifens auf und ist bei Winterreifen üblicherweise speziell hinsichtlich guter Winterfahreigenschaften ausgelegt.

In Fig. 1 ist mit B die Breite des Laufstreifens und damit auch die Breite des Reifens in der Bodenaufstandsfläche unter genormten Bedingungen bezeichnet, die Linie A-A kennzeichnet die Äquatorebene des Reifens. Gemäß Fig. 1 gehören zu den den Profilbereich P1 bildenden Profilpositiven eine Schulterblockreihe 1 und ein Laufstreifenband 2, zu den Profilpositiven, welche den Profilbereich P2 bilden, gehören zwei Laufstreifenbänder 3, 4 und eine Schulterblockreihe 5. Die einzelnen Bänder 2, 3, 4 und Blockreihen 1, 5 sind durch breite, in Umfangsrichtung geradlinig oder im Wesentlichen geradlinig umlaufende Umfangsnuten 6 voneinander getrennt. Die Grenze zwischen den beiden Profilbereichen P1 und P2 verläuft mittig durch die das Band 2 vom Band 3 trennende Umfangsnut 6. Der Profilbereich P1 nimmt zwischen 30% und 45% der Breite B ein, bei der dargestellten Ausführung etwa 40% der Breite B. Das Laufstreifenband 2 ist durch Sacknuten 2a, die von der einen Umfangsnut 6 ausgehen und unter einem Winkel von etwa 60° zur Umfangsrichtung verlaufen, strukturiert. Auch die Laufstreifenbänder 3, 4 im Profilbereich P2 sind durch Sacknuten 3a, 4a strukturiert. Die Schulterblockreihen 1, 5 weisen Blöcke 1 a, 5a auf, die durch Quernuten 9, 10 voneinander getrennt sind. Die Quernuten 9 in der Schulterblockreihe 1 weisen einen leicht bogenförmigen Verlauf auf, die Quernuten 10 in der Schulterblockreihe 5 verlaufen gerade und in Querrichtung des Laufstreifenprofils.

Sämtliche Profilpositive sind durch eine Vielzahl von in Querrichtung oder etwa in Querrichtung verlaufenden Einschnitten 7, 8, 11, 12 strukturiert. Die Einschnitte 7, 8, 11, 12 weisen eine Breite zwischen 0,4 und 0,8 mm und ein Tiefe von mindestens 1,5 mm auf. Die in der Schulterblockreihe 1 und im Laufstreifenband 2 vorgesehenen Einschnitte 7, 8 sind sinus- bzw. wellenförmig ausgeführt. Sowohl die in diesen Laufstreifenbändern 3, 4 als auch die in der Schulterblockreihe 5 verlaufenden Einschnitte 11, 12 sind geradlinig ausgeführte Einschnitte.

Der Laufsteifen wird ferner strukturell derart ausgelegt, dass im Profilbereich P1 die Positivfläche um mindestens 2% größer ist als die Positivfläche im Profilbereich P2. Die Positivfläche ist jener Teil des Laufstreifens, mit welchem dieser beim Abrollen des Reifens unmittelbar in Kontakt mit dem Untergrund kommt. Die Profilpositive sowie die Profilnegative in den Profilbereichen P1 und P2 gliedern jeden dieser Profilbereiche P1, P2 in Reifenumfangsrichtung in gleichartige, aufeinanderfolgende Profilabschnitte, sogenannte Pitches. Pitches werden in bestimmten Abfolgen, den Pitchfolgen, angeordnet und sind üblicherweise in zwei bis fünf unterschiedlichen Umfangslängen vorgesehen. Die Gesamtpitchanzahl der Pitches im Profilbereich P1 des Laufstreifens ist zwischen 7% und 12% geringer als die Gesamtanzahl der Pitches im Profilbereich P2. So kann beispielsweise die Gesamtpitchanzahl im Profilbereich P1 62 und im Profilbereich P2 68 betragen. Dadurch sind im Profilbereich P2 über den Umfang mehr und in Umfangsrichtung demnach auch kürzere Profilpositive ausgebildet als im Profilbereich P1. Die Anzahl der Quernuten 10 im Profilbereich P2, welcher der Innenbereich ist, ist daher größer als im Profilbereich P1, wodurch im Bereich P2 vorteilhafter Weise mehr Griffkanten zur Verfügung stehen als im Profilbereich P1.

Von besonderer Bedeutung ist bei erfindungsgemäß ausgeführten Reifen, dass sich der Laufstreifen über den Querschnitt aus zwei oder drei Umfangsbereichen M1, M2 bzw. M1, M2', M3' zusammensetzt, die aus unterschiedlichen Laufstreifenmischungen (Kautschukmischungen) bestehen. Die in Umfangsrichtung umlaufende Grenze zwischen den beiden Umfangsbereichen M1, M2 bzw. M1, M2' aus unterschiedlichen Laufstreifenmischungen ist nicht identisch mit der Grenze zwischen den beiden Profilbereichen P1 und P2 und liegt bei der dargestellten Ausführungsform innerhalb des Profilbereiches P1, wobei die Breite von M1 zwischen 15% und 25% der Breite B beträgt. Bei der in Fig. 1 gezeigten Ausführungsform liegt zudem die Grenze zwischen den Umfangsbereichen M1, M2 bzw. M1, M2' in der die Schulterblockreihe 1 vom benachbarten Laufstreifenband 2 trennenden Umfangsnut 6.

Bei der zweiten möglichen Ausführung mit drei Umfangsbereichen M1, M2', M3' aus unterschiedlichen Laufstreifenmischungen befindet sich die Grenze zwischen dem Umfangsbereich M2' und M3' in der das Laufstreifenband 2 vom Laufstreifenband 3 trennenden Umfangsnut 6 und stimmt bei der dargestellten Ausführung zumindest im Wesentlichen mit der Grenze zwischen dem Profilbereich P1 und dem Profilbereich P2 überein. Die Breite des Umfangsbereiches M2' entspricht daher der gegenüber M1 verbleibenden Breite des Profilbereiches P1.

Beispiele für konkrete Mischungen BMi1 und BMi2 sowie Mischungskonzepte Mi1 und Mi2 für Umfangsbereiche eines Laufstreifens für einen PKW-Winterreifen gibt Tabelle 1 wieder. Die Tabelle 1 enthält auch Werte bzw. Wertbereiche für die Shore A Härten und den dynamischen Speichermodul E' bei 55°C für die vulkanisierten Mischungen sowie beispielhaft die wichtigsten Bestandteile des Mischungskonzeptes Mi1 für den Umfangsbereich M1 und des Mischungskonzeptes Mi2 für den Umfangsbereich M2. Die Anteile sind jeweils auf 100 Gewichtsteile Kautschuk in der Mischung bezogen. Beide Mischungskonzepte Mi1, Mi2 basieren auf einem Polymersystem, welches eine oder mehrere Kautschuke aus der Gruppe Naturkautschuk, Styrol-Butadienkautschuk und Butadienkautschuk in den angegebenen Anteilen enthält. Als weitere Bestandteile enthalten die Kautschukmischungen Ruß, Kieselsäure, Öl und Weichmacher und die weiteren üblichen nicht genannten Zusätze, wie ZnO, Beschleuniger und Schwefel in den für Laufstreifenmischungen üblichen Anteilen.

Bei beiden Mischungskonzepten Mi1, Mi2 beträgt der bevorzugte Anteil an Kieselsäure gemeinsam mit Ruß zwischen 70 bis 123 Gewichtsteilen. Dabei enthält das Mischungskonzept Mi2 einen höheren Anteil an Kieselsäure und einen geringeren Anteil an Ruß. Das Verhältnis von Ruß zu Kieselsäure beträgt im Mischungskonzept Mi1 zwischen 0,8 und 2,3 und im Mischungskonzept Mi2 zwischen 0,05 und 0,35.

Der dynamische Speichermodul E', welcher ein Maß für die Steifigkeit ist, wurde jeweils mit einem Eplexor bei einer Temperatur von 55°C und als Mittelwert über eine dynamische Dehnung zwischen 0,1 % und 12 % ermittelt. Der Umfangsbereich M1 aus einer Mischung gemäß dem Konzept Mi1 ist um mindestens 5 und um bis zu 15 Härtepunkte härter als der Umfangsbereich M2 aus einer Mischung gemäß dem Konzept Mi2. Der dynamische Speichermodul E' des Umfangsbereiches aus der Mischung Mi1 ist etwa 1,5 bis 3,5 Mal so groß wie jener der Mischung des Umfangsbereiches M2. Der Umfangsbereich M1 ist somit steifer als der Umfangsbereich M2, welcher die besseren Nassgriffeigenschaften aufweist.

Bei einer Ausführung mit drei Umfangsbereichen M1, M2', M3' aus drei unterschiedlichen Mischungen entspricht das Mischungskonzept für den Umfangsbereich M1 dem in Tabelle 1 enthaltenen Mischungskonzept Mi1, die Mischungen für die Umfangsbereiche M2' und M3' werden unterschiedlich ausgeführt, sind jedoch vorzugsweise dem Mischungskonzept Mi2 entnommen. Tabelle 2 enthält konkrete Mischungsbeispiele BMi1, BMi2' und BMi3', wobei BMi1 der Mischung gleicher Bezeichnung aus Tabelle 1 entspricht. Die Mischung BMi2' ist sehr ähnlich zum Beispiel BMi2 aus Tabelle 1, BMi3' unterscheidet sich von der Mischung BMi2' vor Allem im größeren Anteil an Kieselsäure und geringeren Anteil an Ruß. Dabei gilt grundsätzlich, dass die zwei Mischungen BMi2' und BMi3' derart ausgelegt werden, dass die Shore A Härte im Umfangsbereich M1 am größten und im Umfangsbereich M3' am kleinsten ist, die Differenz beträgt jeweils mindestens 3 Härtepunkte. Bezüglich des dynamischen Elastizitätsmoduls E' gilt, dass E' im Umfangsbereich M1 größer ist als E' im Umfangsbereich M2' und hier größer ist als E' im Umfangsbereich M3'.

Tabelle 3 enthält Mischungskonzepte SMi1 und SMi2 für Umfangsbereiche M1 und M2 für PKW-Sommerreifen. Die Teilung eines Laufstreifens für PKW-Sommerreifen in unterschiedlich strukturierte Profilbereiche P1 und P2 und in Umfangsbereiche M1, M2 oder M1, M2', M3' kann analog zur dargestellten und beschriebenen Ausführungsform eines PKW-Winterreifens erfolgen. Das Mischungskonzept SMi1 aus Tabelle 3 entspricht dabei dem Mischungskonzept Mi1 aus Tabelle 1, das Mischungskonzept SMi2 in Tabelle 3 unterscheidet sich vom Mischungskonzept 2 in der Zusammensetzung des Polymersystems, dem Anteil an Kieselsäure und dem Anteil an Ruß. Tabelle 3 enthält zudem zwei konkrete Beispiele BSMi1 und BSMi2 für Mischungen für die Umfangsbereiche Mi1 und Mi2, wenn es sich um einen PKW-Sommerreifen handelt. Im Falle eines PKW-Sommerreifens sind die Unterschiede in der Shore A Härte bis zu 12 Härtepunkte und somit vorzugsweise nicht so groß wie bei einem PKW-Winterreifen.

Tabelle 4 enthält konkrete Mischungsbeispiele BSMi1, BSMi2' und BSMi3' bei einer Ausführung mit drei Umfangsbereichen aus unterschiedlichen Mischungen, wobei das Beispiel für BSMi1 jenem für BSMi1 aus Tabelle 3 entspricht und diese Mischung gemäß dem Mischungskonzept Mi1 aus Tabelle 3 erstellt wird. Die beiden Mischungen für BSMi2' und BSMi3' werden gemäß dem Mischungskonzept SMi2 erstellt, wobei die Mischung für den Umfangsbereich M2' derart ausgelegt wird, dass die Shore A Härte des Umfangsbereiches M2' kleiner ist als jene des Umfangsbereiches M1, jedoch größer ist als jene des Umfangsbereiches M3'. Analoges gilt für den dynamischen Elastizitätsmodul E' bei 55°C. Die Differenz in den Härtegraden beträgt dabei mindestens 3, die Differenz bezüglich E' mindestens 1 MPa.

Die erfindungsgemäße Teilung des Laufstreifens in Umfangsbereiche aus zwei oder drei unterschiedlichen Mischungen ist von besonderem Vorteil. Mit der Erfindung kann dem Umstand bestens Rechnung getragen werden, dass sich die Bodenaufstandsfläche bei hohen Querkräften unter Kurvenfahrt derart ausbildet, dass sie im Bereich der Außenschulter eine zunehmend größere Umfangserstreckung aufweist, als im Bereich der Innenschulter. Der Laufstreifen kann daher nicht nur bezüglich seiner Profilierung sondern auch bezüglich der Mischungen derart ausgelegt werden, dass der Umstand, dass bei Querkräften die Außenschulter überproportional zur Kraftübertragung bei Kurvenfahrt beiträgt, optimal berücksichtigt werden kann.

**Tabelle 1**

| | **Mischungskonzept 1 Mi1** | **Mischungskonzept 2 Mi2** | **Beispiel BMi1** | **Beispiel BMi2** |
|---|---|---|---|---|
| NR | 0 - 15 | 5-50 | - | 50 |
| SSBR | 80 - 100 | 30 - 70 | 80 | 40 |
| BR | 0 - 20 | 5 - 50 | 20 | 10 |
| Kieselsäure | 30 - 50 | 70 - 98 | 45 | 87 |
| Ruß | 40-70 | 5-25 | 38 | 14 |
| Öl + Weichmacher | 25 - 45 | 25 - 50 | 39 | 43 |
| Shore A Härte | 68 - 75 | 60 - 67 | 73 | 62 |
| E' in (MPa) bei 55°C | 9-20 | 6-10 | 15 | 8 |

**Tabelle 2**

| | **Beispiel BMi1** | **Beispiel BMi2'** | **Beispiel BMi3'** |
|---|---|---|---|
| NR | - | 50 | 50 |
| SSBR | 80 | 40 | 40 |
| BR | 20 | 10 | 10 |
| Kieselsäure | 45 | 85 | 90 |
| Ruß | 38 | 18 | 14 |
| Öl + Weichmacher | 39 | 40 | 44 |
| Shore A Härte | 73 | 66 | 62 |
| E' in (MPa) bei 55°C | 15 | 10 | 8 |

**Tabelle 3**

| | **Mischungskonzept 1 SMi1** | **Mischungskonzept 2 SMi2** | **Beispiel BSMi1** | **Beispiel BSMi2** |
|---|---|---|---|---|
| NR | 0-15 | 0-20 | - | 20 |
| SSBR | 80 - 100 | 50 - 100 | 80 | 70 |
| BR | 0 - 20 | 0 - 20 | 20 | 10 |
| Kieselsäure | 30 - 50 | 70 - 95 | 45 | 85 |
| Ruß | 40 - 70 | 5 - 20 | 48 | 13 |
| Öl + Weichmacher | 25 - 45 | 25 - 45 | 39 | 33 |
| Shore A Härte | 68 - 75 | 63 - 70 | 73 | 68 |
| E' in (MPa) bei 55°C | 9-20 | 6-10 | 15 | 8 |

**Tabelle 4**

| | **Beispiel BSMi1** | **Beispiel BSMi2'** | **Beispiel BSMi3'** |
|---|---|---|---|
| NR | - | 15 | 20 |
| SSBR | 80 | 75 | 70 |
| BR | 20 | 10 | 10 |
| Kieselsäure | 45 | 80 | 85 |
| Ruß | 48 | 15 | 13 |
| Öl + Weichmacher | 39 | 31 | 36 |
| Shore A Härte | 73 | 68 | 63 |
| E' in (MPa) bei 55°C | 15 | 9 | 7 |

## Patentansprüche

1. Fahrzeugluftreifen, insbesondere Radialreifen für Personenkraftwagen, mit einem asymmetrisch ausgeführten Laufstreifen (1), dessen mit dem Untergrund in Kontakt tretender Bereich in zwei strukturell unterschiedliche, in Umfangsrichtung umlaufende Profilbereiche (P1, P2) geteilt ist, von welchen der eine den Außenschulterbereich und der andere den Innenschulterbereich aufweist, wobei der Laufstreifen (1) einen Umfangsbereich (M1) aus einer ersten Laufstreifenmischung und einen Umfangsbereich aus einer zweiten Laufstreifenmischung (M2, M2') aufweist, wobei die erste Laufstreifenmischung härter ist und einen größeren dynamischen Speichermodul E' bei 55°C aufweist als die zweite Laufstreifenmischung,
**dadurch gekennzeichnet,**
**dass** die Grenze zwischen den beiden Umfangsbereichen (M1, M2; M2') aus den unterschiedlichen Mischungen in jenem Profilbereich (P1) verläuft, welcher die Außenschulter des Laufstreifens (1) aufweist, und gegenüber der Grenze zwischen den unterschiedlich strukturierten Profilbereichen (P1, P2) in axialer Richtung und Richtung Außenschulter versetzt ist.

2. Fahrzeugluftreifen nach Anspruch 1, **dadurch gekennzeichnet, dass** in jenem Profilbereich (P1), welcher die Außenschulter des Laufstreifens aufweist, der Umfangsbereich (M1) aus der ersten härteren Mischung vorgesehen ist.

3. Fahrzeugluftreifen, insbesondere Winterreifen, nach Anspruch 1 oder 2,
**dadurch gekennzeichnet, dass** der Laufstreifen aus zwei Umfangsbereichen (M1, M2) aus unterschiedlichen Mischungen besteht, deren Unterschied in der Shore A Härte bis zu 15 Härtepunkte beträgt.

4. Fahrzeugluftreifen, insbesondere Sommerreifen, nach Anspruch 1 oder 2,
**dadurch gekennzeichnet, dass** der Laufstreifen aus zwei Umfangsbereichen (M1, M2) aus unterschiedlichen Mischungen besteht, deren Unterschied in der Shore A Härte bis zu 12 Härtepunkte beträgt.

5. Fahrzeugluftreifen nach einem der Ansprüche 1 bis 4, **dadurch gekennzeichnet, dass** der Laufstreifen aus zwei Umfangsbereichen (M1, M2) aus unterschiedlichen Mischungen besteht, deren Unterschied im dynamischen Elastizitätsmodul E' zwischen 3 und 14 MPa beträgt.

6. Fahrzeugluftreifen nach Anspruch 1 oder 2, **dadurch gekennzeichnet, dass** an die Umfangsbereiche (M1, M2') aus der ersten und der zweiten Mischung ein Umfangsbereich (M3') aus einer dritten Mischung anschließt, welcher die geringste Shore A Härte und den geringsten Elastizitätsmodul E' von allen Mischungen aufweist und den Innenschulterbereich umfasst.

7. Fahrzeugluftreifen nach Anspruch 6, **dadurch gekennzeichnet, dass** die Grenze zwischen dem zweiten und dem dritten Umfangsbereich (M2', M3') mit der Grenze zwischen den beiden Profilbereichen (P1, P2) zumindest im Wesentlichen zusammen fällt.

8. Fahrzeugluftreifen nach Anspruch 6 oder 7, **dadurch gekennzeichnet, dass** die beiden Mischungen für die den zweiten und den dritten Umfangsbereich (M2', M3') im Polymersystem zumindest im Wesentlichen übereinstimmen.

9. Fahrzeugluftreifen nach einem der Ansprüche 6 bis 8, **dadurch gekennzeichnet, dass** die Mischungen für den zweiten und den dritten Umfangsbereich (M2', M3') unterschiedliche Anteile an Kieselsäure und an Ruß enthalten.

10. Fahrzeugluftreifen nach einem der Ansprüche 1 bis 9, **dadurch gekennzeichnet, dass** der die Außenschulter umfassende Profilbereich (P1) 30% bis 45% der Laufstreifenbreite B einnimmt.

11. Fahrzeugluftreifen nach einem der Ansprüche 1 bis 10, **dadurch gekennzeichnet, dass** der die Außenschulter umfassende Umfangsbereich (M1) 15% bis 25% der Laufstreifenbreite B einnimmt.

12. Fahrzeugluftreifen nach einem der Ansprüche 1 bis 11, **dadurch gekennzeichnet, dass** bei einer Teilung in drei Umfangsbereiche (M1, M2', M3') der mittlere Umfangsbereich (M2') 15% bis 20% der Laufstreifenbreite B einnimmt.

13. Fahrzeugluftreifen nach einem der Ansprüche 1 bis 12, **dadurch gekennzeichnet, dass** die Grenzen zwischen den Profilbereichen (P1, P2) und die Grenzen zwischen den Umfangsbereichen (M1, M2; M1, M2', M3') zumindest im Wesentlichen im Bereich von in Umfangsrichtung umlaufenden Nuten (6) verlaufen.

14. Fahrzeugluftreifen nach Ansprüchen 1 bis 13, **dadurch gekennzeichnet, dass** der die Außenschulter umfassende Profilbereich (P1) eine mindestens 2% größere Positivfläche aufweist als der die Innenschulter umfassende Profilbereich (P2).

## Claims

1. Pneumatic vehicle tyre, in particular a radial tyre for passenger cars, with an asymmetrically configured tread rubber (1), the region of which that comes into contact with the ground being divided into two structurally different profile regions (P1, P2) running around in the circumferential direction, one of which has the outer shoulder region and the other has the inner shoulder region, the tread rubber (1) having a circumferential region (M1) of a first tread rubber mixture and a circumferential region of a second tread rubber mixture (M2, M2'), the first tread rubber mixture being harder and having a greater dynamic storage modulus E' at 55°C than the second tread rubber mixture, **characterized in that** the limit between the two circumferential regions (M1, M2; M2') of the different mixtures runs **in that** profile region (P1) that has the outer shoulder of the tread rubber (1), and is offset with respect to the limit between the differently structured profile regions (P1, P2) in the axial direction and in the direction of the outer shoulder.

2. Pneumatic vehicle tyre according to Claim 1, **characterized in that** the circumferential region (M1) of the first, harder mixture is provided **in that** profile region (P1) that has the outer shoulder of the tread rubber.

3. Pneumatic vehicle tyre, in particular a winter tyre, according to Claim 1 or 2, **characterized in that** the tread rubber comprises two circumferential regions (M1, M2) of different mixtures, the difference of which in terms of the Shore A hardness is up to 15 hardness points.

4. Pneumatic vehicle tyre, in particular a summer tyre, according to Claim 1 or 2, **characterized in that** the tread rubber comprises two circumferential regions (M1, M2) of different mixtures, the difference of which in terms of the Shore A hardness is up to 12 hardness points.

5. Pneumatic vehicle tyre according to one of Claims 1 to 4, **characterized in that** the tread rubber comprises two circumferential regions (M1, M2) of different mixtures, the difference of which in terms of the dynamic modulus of elasticity E' is between 3 and 14 MPa.

6. Pneumatic vehicle tyre according to Claim 1 or 2, **characterized in that** the circumferential regions (M1, M2') of the first and second mixtures are adjoined by a circumferential region (M3') of a third mixture, which has the lowest Shore A hardness and the lowest modulus of elasticity E' of all the mixtures and comprises the inner shoulder region.

7. Pneumatic vehicle tyre according to Claim 6, **characterized in that** the limit between the second and third circumferential regions (M2', M3') at least substantially coincides with the limit between the two profile regions (P1, P2).

8. Pneumatic vehicle tyre according to Claim 6 or 7, **characterized in that** the two mixtures for the second and third circumferential regions (M2', M3') at least substantially coincide in the polymer system.

9. Pneumatic vehicle tyre according to one of Claims 6 to 8, **characterized in that** the mixtures for the second and third circumferential regions (M2', M3') contain different proportions of silica and carbon black.

10. Pneumatic vehicle tyre according to one of Claims 1 to 9, **characterized in that** the profile region (P1) comprising the outer shoulder takes up 30% to 45% of the tread rubber width B.

11. Pneumatic vehicle tyre according to one of Claims 1 to 10, **characterized in that** the circumferential region (M1) comprising the outer shoulder takes up 15% to 25% of the tread rubber width B.

12. Pneumatic vehicle tyre according to one of Claims 1 to 11, **characterized in that**, in a division into three circumferential regions (M1, M2', M3'), the middle circumferential region (M2') takes up 15% to 20% of the tread rubber width B.

13. Pneumatic vehicle tyre according to one of Claims 1 to 12, **characterized in that** the limits between the profile regions (P1, P2) and the limits between the circumferential regions (M1, M2; M1, M2', M3') run at least substantially in the region of channels (6) running around in the circumferential direction.

14. Pneumatic vehicle tyre according to Claims 1 to 13, **characterized in that** the profile region (P1) comprising the outer shoulder has an at least 2% larger positive area than the profile region (P2) comprising the inner shoulder.

## Revendications

1. Bandage pneumatique pour roue de véhicule, en particulier bandage radial pour roue de voiture automobile, présentant une bande de roulement (1) de configuration asymétrique dont la partie entrant en contact avec le sol est divisée en deux zones profilées (P1, P2) différentes s'étendant dans la direction périphérique et dont l'une présente la partie d'épaulement extérieur et l'autre la partie d'épaulement intérieure, la bande de roulement (1) présentant une partie périphérique (M1) en un premier mélange de bande de roulement et une partie périphérique en un deuxième mélange (M2, M2') de bande de roulement, le premier mélange de bande de roulement étant plus dur et présentant un module de mémoire dynamique E' à 55°C plus élevé que le deuxième mélange de bande de roulement,
**caractérisé en ce que**
la limite entre les deux parties périphériques (M1, M2; M2') constituées des différents mélanges s'étend dans la zone profilée (P1) qui présente l'épaulement extérieur de la bande de roulement (1) et est décalée par rapport à la limite entre les parties profilées (P1, P2) de structures différentes dans la direction axiale et dans la direction de l'épaulement extérieur.

2. Bandage pneumatique pour roue de véhicule selon la revendication 1, **caractérisé en ce que** la partie périphérique (M1) en le premier mélange plus dur est prévue dans la zone profilée (P1) qui présente l'épaulement extérieur de la bande de roulement.

3. Bandage pneumatique pour roue de véhicule, en particulier bandage de roue d'hiver, selon les revendications 1 ou 2, **caractérisé en ce que** la bande de roulement est constituée de deux parties périphériques (M1, M2) en mélanges différents dont la différence entre les duretés Shore A peut atteindre 15 points de dureté.

4. Bandage pneumatique pour roue de véhicule, en particulier bandage de roue d'été, selon les revendications 1 ou 2, **caractérisé en ce que** la bande de roulement est constituée de deux parties périphériques (M1, M2) en mélanges différents dont la différence entre les duretés Shore A peut atteindre 12 points de dureté.

5. Bandage pneumatique pour roue de véhicule selon l'une des revendications 1 à 4, **caractérisé en ce que** la bande de roulement est constituée de deux parties périphériques (M1, M2) en mélanges différents dont la différence entre les modules d'élasticité dynamique E' est comprise entre 3 et 14 MPa.

6. Bandage pneumatique pour roue de véhicule selon les revendications 1 ou 2, **caractérisé en ce qu'**une partie périphérique (M3') qui présente la plus petite dureté Shore A et le plus petit module d'élasticité E' de tous les mélanges et qui comprend la partie d'épaulement intérieur se raccorde aux parties périphériques (M1, M2') constituées du premier et du deuxième mélange.

7. Bandage pneumatique pour roue de véhicule selon la revendication 6, **caractérisé en ce que** la limite entre la deuxième et la troisième partie périphérique (M2', M3') coïncide au moins essentiellement avec la limite entre les deux parties profilées (P1, P2).

8. Bandage pneumatique pour roue de Véhicule selon les revendications 6 ou 7, **caractérisé en ce que** les deux mélanges prévus pour la deuxième et la troisième partie périphérique (M2', M3') ont des systèmes polymères qui se correspondent au moins essentiellement.

9. Bandage pneumatique pour roue de véhicule selon l'une des revendications 6 à 8, **caractérisé en ce que** les mélanges prévus pour la deuxième et la troisième partie périphérique (M2', M3') contiennent des teneurs différentes en acide silicique et en noir de carbone.

10. Bandage pneumatique pour roue de véhicule selon l'une des revendications 1 à 9, **caractérisé en ce que** la partie profilée (P1) qui comprend l'épaulement extérieur occupe de 30 % à 45 % de la largeur B de la bande de roulement.

11. Bandage pneumatique pour roue de véhicule selon l'une des revendications 1 à 10, **caractérisé en ce que** la partie périphérique (M1) qui comprend l'épaulement extérieur occupe de 15 % à 25 % de la largeur B de la bande de roulement.

12. Bandage pneumatique pour roue de véhicule selon l'une des revendications 1 à 11, **caractérisé en ce que** dans le cas d'une division en trois parties périphériques (M1, M2', M3'), la partie périphérique centrale (M2') occupe de 15 % à 20 % de la largeur B de la bande de roulement.

13. Bandage pneumatique pour roue de véhicule selon l'une des revendications 1 à 12, **caractérisé en ce que** la limite entre les parties profilées (P1, P2) et les limites entre les parties périphériques (M1, M2; M1, M2', M3') s'étendent au moins essentiellement au niveau de rainures (6) qui s'étendent dans la direction périphérique.

14. Bandage pneumatique pour roue de véhicule selon les revendications 1 à 13, **caractérisé en ce que** la partie profilée (P1) qui comprend l'épaulement extérieur présente une surface positive d'au moins 2 % plus grande que la partie profilée (P2) qui comprend l'épaulement intérieur.
